Europäisches Patentamt

European Patent Office

Office européen des brevets

(19)

(11) **EP 0 807 208 B1**

(12) **EUROPÄISCHE PATENTSCHRIFT**

(45) Veröffentlichungstag und Bekanntmachung des Hinweises auf die Patenterteilung:
**27.11.2002 Patentblatt 2002/48**

(21) Anmeldenummer: **96924757.6**

(22) Anmeldetag: **20.07.1996**

(51) Int Cl.⁷: $F02P \ 5/15$

(86) Internationale Anmeldenummer:
**PCT/DE96/01333**

(87) Internationale Veröffentlichungsnummer:
**WO 97/021029 (12.06.1997 Gazette 1997/25)**

(54) **VERFAHREN UND VORRICHTUNG ZUR STEUERUNG EINER BRENNKRAFTMASCHINE**

METHOD AND DEVICE FOR THE CONTROL OF AN INTERNAL-COMBUSTION ENGINE

PROCEDE ET DISPOSITIF DE REGULATION D'UN MOTEUR A COMBUSTION INTERNE

(84) Benannte Vertragsstaaten:
**DE FR IT**

(30) Priorität: **05.12.1995 DE 19545221**

(43) Veröffentlichungstag der Anmeldung:
**19.11.1997 Patentblatt 1997/47**

(73) Patentinhaber: **ROBERT BOSCH GMBH**
**70442 Stuttgart (DE)**

(72) Erfinder: **ZHANG, Hong**
**D-93057 Regensburg (DE)**

(56) Entgegenhaltungen:
EP-A- 0 542 562        DE-A- 3 341 622
DE-A- 4 136 024        DE-A- 4 141 947
DE-A- 4 239 711        GB-A- 2 271 198
US-A- 5 115 782        US-A- 5 284 116

• **PATENT ABSTRACTS OF JAPAN vol. 012, no. 336 (M-739), 9.September 1988 & JP 63 097873 A (NISSAN MOTOR CO LTD), 28.April 1988,**

**Beschreibung**

Stand der Technik

Die Erfindung betrifft ein Verfahren und eine Vorrichtung zur Steuerung einer Brennkraftmaschine gemäß den Oberbegriffen der unabhängigen Patentansprüche.

Aus der DE 42 39 711 A1 ist zur Steuerung einer Antriebseinheit, insbesondere einer Brennkraftmaschine, bekannt, einen Sollwert für ein Drehmoment der Antriebseinheit in eine Korrektur des Zündwinkels, in Ausblenden bzw. Zuschalten der Kraftstoffzufuhr zu einzelnen Zylindern und/oder in eine Beeinflussung der Luftzufuhr zur Brennkraftmaschine umzusetzen. Darüber hinaus ist aus der WO-A 95/24550 zusätzlich die Beeinflussung des Kraftstoff-Luftverhältnisses zur Realisierung des vorgegebenen Drehmomentenwerts bekannt. Ferner wird bei den bekannten Lösungen das Istmotormoment unter Berücksichtigung der aktuellen Motoreinstellung (bezüglich Füllung, Kraftstoffzumessung und Zündwinkel) berechnet. Dabei werden Motordrehzahl, Motorlast und gegebenenfalls die Abgaszusammensetzung herangezogen. Weitere Größen, die den Wirkungsgrad der Brennkraftmaschine beeinflussen können, wie die Temperatur des zugeführten Luft-/Kraftstoffgemischs vor der Zündung und/oder die Rate der in den Verbrennungsraum rückgeführten Abgasmenge, werden nicht berücksichtigt. Da zur Umsetzung des geforderten Motormoments in Zündwinkelverstellung, Kraftstoff- und Lufteingriff das berechnete Istmoment berücksichtigt wird, kann die bekannte Vorgehensweise bei der Einstellung des Motormoments und/oder beim errechneten Istmoment, das auch anderen Steuereinheiten, z. B. einer Antriebsschlupfregelung oder einer Getriebesteuerung, zur Verfügung gestellt wird, in einigen Anwendungsfällen zu ungenau sein.

Es ist daher Aufgabe der Erfindung, die Genauigkeit der bekannten Lösungen zu verbessern.

Dies wird durch die kennzeichnenden Merkmale der unabhängigen Patentansprüche erreicht.

Aus der EP 112 494 A1 (US-Patent 4 856 465) ist bekannt, die Überschneidungszeiten und der Ein- und Auslaßventile der Zylinder einer Brennkraftmaschine zu steuern. Die Ventilüberschneidungszeiten werden dabei durch eine von Motordrehzahl und Motorlast abhängige Verstellung der Nockenwelle eingestellt.

Aus "Bosch, kraftfahrtechnisches Taschenbuch, 21. Auflage, 1991, Seiten 470 und 471" ist ein Abgasrückführsystem bekannt, bei welchem durch Ansteuern eines Steuerventils über eine zusätzliche Leitung eine vorgegebene Abgasmenge in den Ansaugtrakt der Brennkraftmaschine stromabwärts der Drosselklappe zurückgeführt wird. Diese äußere Abgasrückführung ist von der obengenannten inneren Abgasrückführung bei Überschneidung der Öffnungszeiten der Ein- und Auslaßventile zu unterscheiden, bei der ebenfalls gewisse Abgasmengen in die Verbrennungskammer zurückgeführt werden.

Die DE 41 36 024 A1 zeigt die Korrektur eines Zündzeitpunkts abhängig von einer Abgasrückführrate. Hinweise auf ein Momentenmodell und dessen Genauigkeitsverbesserung werden nicht gegeben.

Das US-Patent 5,115,782 zeigt die-Steuerung einer Brennkraftmaschine ohne Drosselklappe mit Hilfe einer Verstellung der Einlaßventilöffnungszeiten. Der Zündwinkel der Brennkraftmaschine wird dabei abhängig von Motordrehzahl und vom Kraftstoffmengensignal bestimmt. Der auf diese Weise gebildete Zündwinkel wird dann abhängig von Motortemperatur und Lufttemperatur korrigiert. Auch hier werden keine Hinweise auf ein Momentenmodell und dessen Genauigkeitsverbesserung gegeben.

Das US-Patent 5,284,116 beschreibt ein Kraftfahrzeugsteuersystem, bei welchem verschiedene Größen u. a. Lufttemperatur und Motortemperatur, erfaßt und abhängig davon Motorbetriebsgrößen wie der Zündwinkel ermittelt und korrigiert werden.

Die GB 2 271 198 A zeigt die Bildung eines Korrekturzündwinkels abhängig von der Differenz zwischen einem Soll- und einem Istdrehmoment, Drosselklappenstellung und Motordrehzahl. Hinweise auf ein Momentenmodell und dessen Genauigkeitsverbesserung werden nicht gegeben.

Vorteile der Erfindung

Durch die Berücksichtigung zusätzlicher Größen, die den Wirkungsgrad und damit die Drehmomentenerzeugung der Brennkraftmaschine beeinflussen, wie Gemischtemperatur vor der Zündung und/oder der Abgasrückführrate (sowohl innere als auch äußere) wird die Genauigkeit bei der Umsetzung des Sollmotormoments in die Steuergrößen der Brennkraftmaschine verbessert.

Darüber hinaus wird eine genauere Momentenberechnung, auch für andere Steuergeräte, bereitgestellt.

Besonders vorteilhaft ist, als zusätzliche Größen die Gemischtemperatur vor der Zündung und/oder die Abgasrückführrate zu berücksichtigen, da diese erheblichen Einfluß auf den Wirkungsgrad und damit auf das Drehmoment der Brennkraftmaschine haben.

Vorteilhaft ist ferner, daß die zusätzlichen Größen an einer zentralen Stelle der Momentenberechnung und -umsetzung, nämlich bei der Bestimmung des optimalen Zündwinkels, das heißt des Zündwinkels, bei dem die Brennkraftmaschine den größten Wirkungsgrad entfaltet, mit einbezogen werden. Auf diese Weise kann die Optimierung durch Korrektur einer Größe durchgeführt werden.

Weitere Vorteile ergeben sich aus der nachfolgenden Beschreibung von Ausführungsbeispielen bzw. aus den abhängigen Patentansprüchen.

Zeichnung

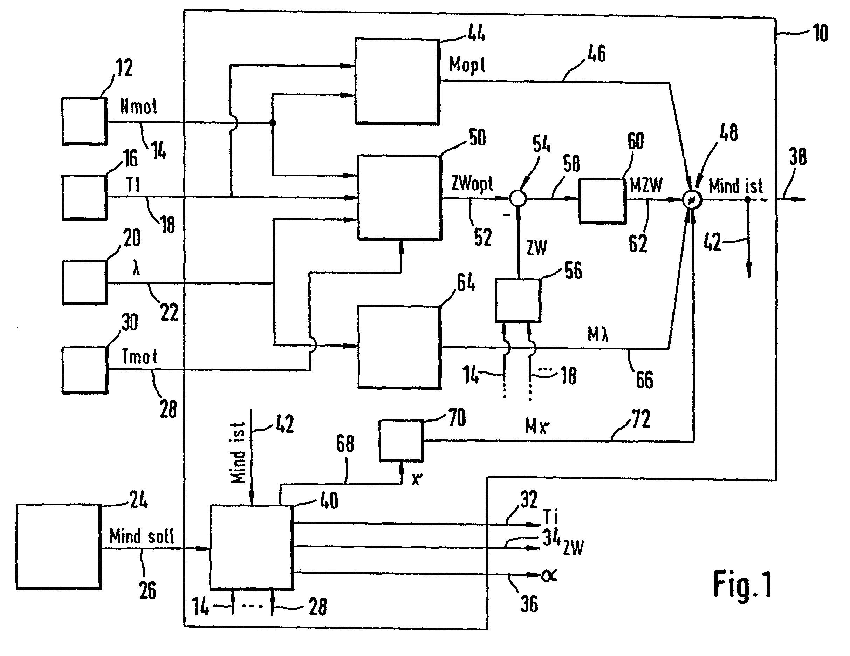

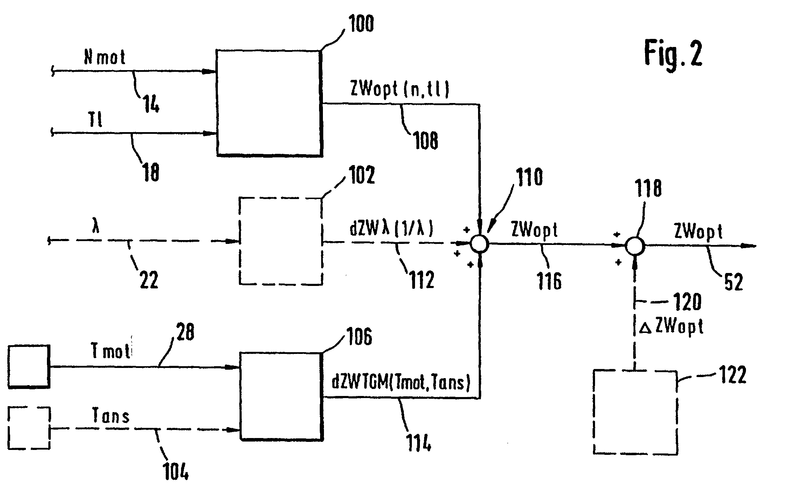

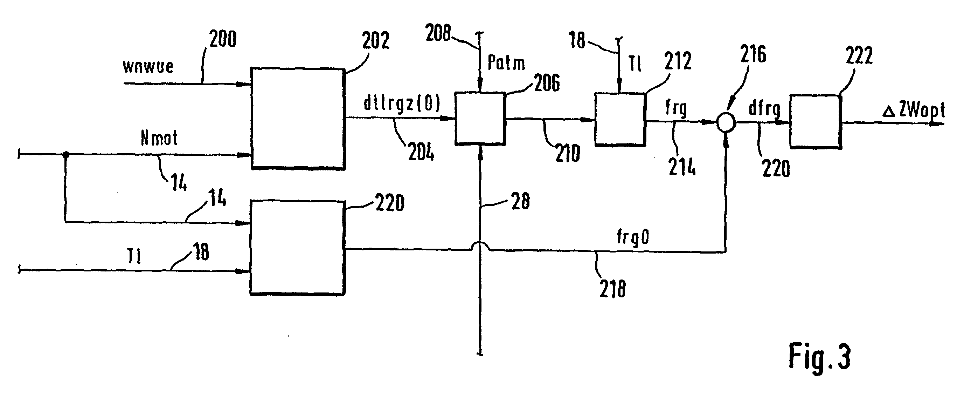

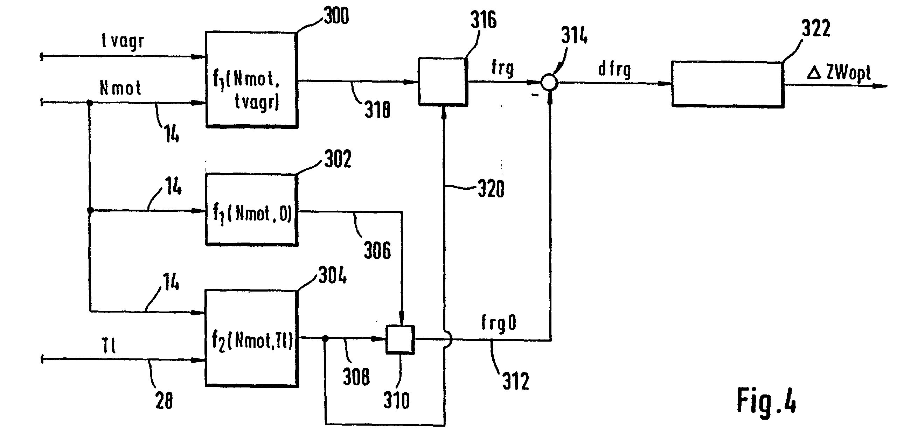

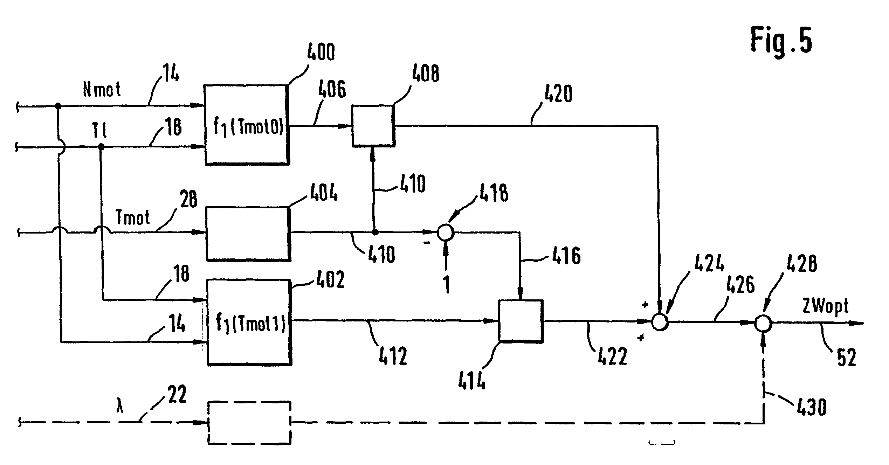

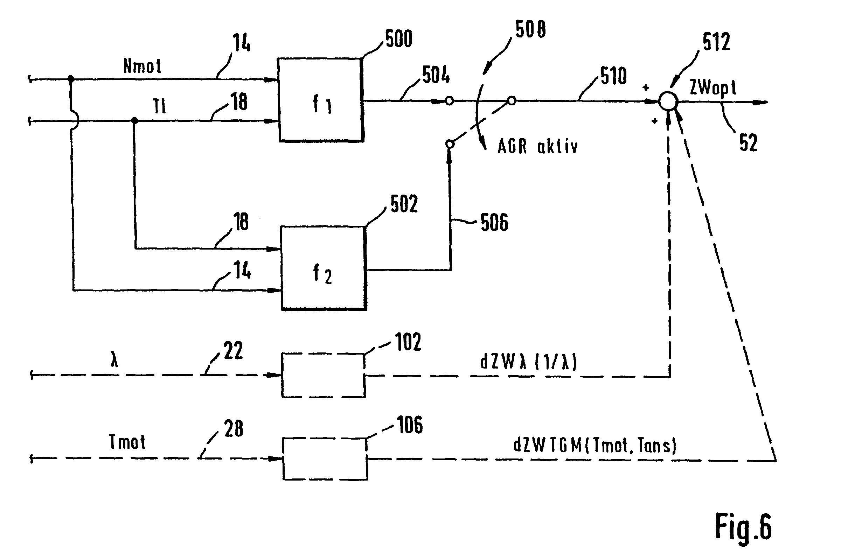

Die Erfindung wird nachstehend anhand der in der Zeichnung dargestellten Ausführungsformen näher erläutert. Dabei zeigt Figur 1 die Grundstruktur eines Steuersystems für eine Brennkraftmaschine bei welchem ein Sollmomentenwert in Steuergrößen für die Kraftstoffzufuhr, den Zündwinkel, die Luftzufuhr und/oder die Gemischzusammensetzung umgesetzt wird und/oder ein Istwert für das Drehmoment der Brennkraftmaschine aus Betriebsgrößen ermittelt wird. In Figur 2 ist ein erstes Ausführungsbeispiel zur Berücksichtigung der Gemischtemperatur bei der Bestimmung des Drehmoments bzw. der Umsetzung des Sollmoments dargestellt. Figur 3 zeigt ergänzend oder alternativ zur Lösung nach Figur 2 in diesem ersten Ausführungsbeispiel die Berücksichtigung der inneren Abgasrückführung, während in Figur 4 die Berücksichtigung der externen Abgasrückführung dargestellt ist. In Figur 5 ist ein zweites Ausführungsbeispiel zur Berücksichtigung der inneren Abgasrückführung dargestellt, während in Figur 6 ein zweites Ausführungsbeispiel zur Berücksichtigung der externen Abgasrückführung bei der Momentenberechnung bzw. der Umsetzung des Sollmomentenwertes angegeben ist.

Beschreibung von Ausführungsbeispielen

Figur 1 zeigt anhand eines Übersichtsblockschaltbildes die grundsätzliche Struktur eines Steuersystems, bei welchem ein Solldrehmomentenwert in Steuergrößen für eine Brennkraftmaschine umgesetzt und/oder auf der Basis von Betriebsgrößen der Brennkraftmaschine das Drehmoment der Brennkraftmaschine bestimmt wird. Die Blockschaltbilddarstellung wurde dabei aus Übersichtlichkeitsgründen gewählt. In einem bevorzugten Ausführungsbeispiel sind dabei die in der Steuereinheit gezeigten Blöcke als Programmteil oder Programmelement ausgeführt.

Der Steuereinheit 10 wird von einer Meßeinrichtung 12 zur Erfassung der Motordrehzahl Nmot eine Eingangsleitung 14, von einer Meßeinrichtung 16 für die Motorlast (Luftmenge, Luftmasse, Saugrohrdruck) TL eine Leitung 18 und von einer Meßeinrichtung 20 zur Erfassung der Abgaszusammensetzung λ eine Eingangsleitung 22 zugeführt. Ferner wird in einem bevorzugten Ausführungsbeispiel von einer weiteren Steuereinheit 24 zur Übermittlung des Sollmoments Msoll eine Leitung 26 zugeführt. Darüber hinaus ist wenigstens eine weitere Eingangsleitung 28 vorgesehen, die von einer Meßeinrichtung 30 zur Erfassung der Motortemperatur Tmot stammt. Nicht dargestellt sind Eingangsleitungen von Meßeinrichtungen zur Erfassung der Ansauglufttemperatur Tans, die im Rahmen eines bevorzugten Ausführungsbeispiels vorhanden ist, und von weiteren Betriebsgrößen, wie beispielsweise Fahrzeuggeschwindigkeit, Nokkenwellenstellung, etc., die zur Steuerung der Brennkraftmaschine notwendig sind. Über die Ausgangsleitungen 32, 34 und 36 beeinflußt die Steuereinheit 10 die Steuergrößen einer Brennkraftmaschine, die einzuspritzende Kraftstoffmenge Ti, der einzustellende Zündwinkel ZW und/oder die einzustellende Luftzufuhr α. Ferner wird in einem bevorzugten Ausführungsbeispiel über die Ausgangsleitung 38 der errechnete Istmomentenwert Mist an andere Steuereinheiten abgegeben.

Selbstverständlich weist die Steuereinheit 10 neben den in Figur gezeigten Elementen wenigstens Mittel zur Bestimmung der einzuspritzenden Kraftstoffmenge, des einzustellenden Zündwinkels und/oder der einzustellenden Luftzufuhr auf. Gleichfalls können gegebenenfalls Verfahren zur Nockenwellensteuerung und/oder zur Abgasrückführung gemäß dem eingangs genannten Stand der Technik Teil der Steuereinheit 10 sein.

Zur Umsetzung des über die Leitung 26 zugeführten Sollmoments in die Steuergrößen der Brennkraftmaschine wird die aus dem Stand der Technik bekannte Vorgehensweise eingesetzt (symbolisch als Block 40 zusammengefaßt). Die notwendigen Betriebsgrößen werden über die Eingangsleitungen 14 bis 28, das errechnete Istmoment Mist über eine Leitung 42 zugeführt. Nach der aus dem Stand der Technik bekannten Vorgehensweise wird der Sollmomentenwert auf Basis der zugeführten Größen in eine Korrektur der Einstellung der Luftzufuhr a, eine Korrektur des einzustellenden Zündwinkels ZW, eine Korrektur der Gemischzusammensetzung λ und/oder in eine vorgegebene Anzahl X von Zylindern, zu denen die Einspritzung unterbrochen wird, umgesetzt. Über die Ausgangsleitungen der Steuereinheit 10 werden diese berechneten Steuergrößen eingestellt.

Zur Bestimmung des Istmomentenwertes wird im Grundsatz ebenfalls der aus dem Stand der Technik bekannte Weg beschritten. In einem ersten Kennfeld 44, dem über die Leitungen 14 und 18 die Motordrehzahl und die Motorlast zugeführt werden, wird das optimale Verbrennungsmoment Mopt bestimmt. Das optimale Verbrennungsmoment ist das auf der Basis der gemessenen Werte Drehzahl und Last ermittelte Motormoment, welches bei einem optimalen Zündwinkel, das heißt beim maximalen Wirkungsgrad auftritt. Über eine Leitung 46 wird der errechnete Momentenwert an die Verknüpfungsstelle 48 geführt. Entsprechend wird im Kennfeld 50 aus Motordrehzahl und Motorlast sowie aus der Abgaszusammensetzung, die über die Leitung 22 zugeführt ist, der optimale Zündwinkel zwopt bestimmt, das heißt der Zündwinkel, bei dessen Einstellung die Brennkraftmaschine mit maximalen Wirkungsgrad arbeitet. Dieser wird über die Leitung 52 in einer Verknüpfungsstelle 54 mit dem Zündwinkel zw ohne zusätzliche Eingriffe verknüpft. Dieser wird hauptsächlich auf der Basis der über die Leitungen 14 und 18 zugeführten Betriebsgrößen im Kennfeld 56 gebildet. Er stellt den Zündwinkel dar, der im aktuellen Betriebspunkt eingestellt wird, ohne daß zusätzliche Eingriffe wie die Korrektur zur Realisierung des Sollmoments berücksichtigt sind. Die Differenz zwischen optimalen Zündwinkel und diesem Kennfeldzündwinkel wird über die Leitung 58 zur Wirkungsgradkennlinie 60 geführt, die die Differenz in ein Korrekturmomentenwert MZW umsetzt. Dieser Wert wird über die Leitung 62 der Verknüpfungsstelle 48 zugeführt.

Ferner ist eine Kennlinie 64 vorgesehen, welcher die Leitung 22 zugeführt wird und die die Abweichung der Abgaszusammensetzung vom stöchiometrischen Wert in einen Momentenkorrekturwert Mλ umsetzt. Dieser wird über die Leitung 66 der Verknüpfungsstelle 48 zugeführt.

Ferner liegt im Berechnungsblock 40 Information über die Anzahl X der ausgeblendeten Zylinder vor. Diese wird über die Leitung 68 einem Berechnungsblock 70 zugeführt. Dieser bildet einen Momentenkorrekturwert MX auf der Basis der ausgeblendeten Zylinder nach Maßgabe der prozentualen Momentenreduzierung durch Ausblendung (1-X/Z mit X Zahl der ausgeblendeten Zylinder, Z Gesamtzahl), welcher über die Leitung 72 der Verknüpfungsstelle 48 zugeführt wird. Durch Multiplikation des optimalen Motormoments und der Zündwinkel-, Gemischzusammensetzungs- und Ausblendungskorrekturwerte wird das Istmoment Mist gebildet, welches über die Leitung 38 nach außen oder über die Leitung 42 zum Berechnungsblock 40 geführt wird.

Wird die Brennkraftmaschine ausschließlich mit stöchiometrischem Gemisch betrieben, so kann Berücksichtigung der Abgaszusammensetzung entfallen.

Zusammenfassend ergibt sich das Istmotormoment gemäß folgender Gleichung:

$$\text{Mist} = \text{Mopt[Nmot,Tl]*MZW[zwopt-zw]*M}\lambda[1/\lambda]\text{*MX(1-X/Z)} \tag{1}$$

Während das optimale Verbrennungsmoment Mopt von Drehzahl, Last und ggf. Gemischzusammensetzung abhängt, hängt der optimale Zündwinkel nicht nur von diesen Größen, sondern auch von weiteren die Verschiebung des optimalen Zündwinkels beeinflussenden Größen ab wie von die Gemischtemperatur am Ende der Verdichtung und/oder der inneren und/oder äußeren Abgasrückführrate. Diese Abhängigkeit ist in Figur 1 am Beispiel der Motortemperatur in Figur 1 durch die Leitung 28 symbolisiert und wird in den Figuren 2 bis 6 näher erläutert.

Es hat sich gezeigt, daß die Gemischtemperatur eine Funktion der Ansauglufttemperatur beim Eintritt in den Zylinder und der Brennraumwandtemperatur ist. Letztere kann durch die Motortemperatur angenähert werden. Die Temperatur der Ansaugluft beim Eintritt in den Zylinder hängt wiederum von der Ansauglufttemperatur nahe der Drosselklappe und der Motortemperatur ab. Das heißt die Gemischtemperatur kann durch Motortemperatur und Ansauglufttemperatur beschrieben werden. Daher wird erfindungsgemäß zur Verbesserung der Genauigkeit der Bestimmung des Moments bzw.der Umsetzung des Sollmoments Motortemperatur und Ansauglufttemperatur berücksichtigt, indem der optimale Zündwinkel entsprechend korrigiert wird.

Die Abhängigkeit des optimalen Zündwinkels von der Gemischtemperatur TGM ergibt sich nach der folgenden Gleichung:

$$\text{ZWopt} = \text{ZWopt(N,TL)} + \text{dZW}\lambda(1/\lambda) + \text{dZWTGM(Tmot,Tans)} \tag{2}$$

(dZWλ Korrekturwert durch Abweichung der Gemischzusammensetzung vom stöchiometrischen Wert; dZWTGM Korrekturwert durch abgeschätzte Gemischtemperatur).

Die Berechnung des optimalen Zündwinkels gemäß Gleichung (2) ist in Figur 2 dargestellt. Im ersten Kennfeld 100 wird aus Motordrehzahl und Motorlast der optimale Zündwinkel abhängig von diesen Größen bestimmt. Im Kennfeld 102 wird der Korrekturwert dZWλ abhängig vom Kehrwert der Abgaszusammensetzung bestimmt, um die durch die Abweichung von stöchiometrischen Gemisch hervorgerufene Wirkungsgradänderung zu berücksichtigen. Ferner wird über die Leitung 28 ein Maß für die Motortemperatur und über die Leitung 104 ein Maß für die Ansauglufttemperatur Tans zugeführt. Diese werden im Kennfeld 106 in den Korrekturwert dZWTGM umgesetzt, der die durch die Gemischtemperatur Wirkungsgradänderung berücksichtigt. Die ermittelten Größen werden über Leitungen 108, 112 und 114 zur Verknüpfungsstelle 110 geführt. In dieser werden die drei Werte zum optimalen Zündwinkel ZWopt addiert, der über eine Leitung 116 abgegeben wird.

Im bevorzugten Ausführungsbeispiel werden zusätzlich zur Gemischtemperaturabhängigkeit des optimalen Zündwinkels auch die Auswirkungen der inneren und/oder der äußeren Abgasrückführung berücksichtigt. Zu diesem Zweck führt die Leitung 116 auf eine Verknüpfungsstelle 118, in dem ein weiterer Korrekturwert ΔZWopt zum optimalen Zündwinkelwert addiert wird. Die Bildung des oder der weiteren Zündwinkelkorrekturwerte ist in den Figuren 3 und 4 näher beschrieben. Die Ausgangsleitung der Verknüpfungsstelle 118 bildet die Leitung 52, über die der optimale Zündwinkel ZWopt den weiteren Berechnungen zugeführt wird.

Die Gemischtemperaturabhängigkeit des optimalen Zündwinkels kann in erster Näherung auch nur durch die Motortemperatur beschrieben werden, so daß der Gemischtemperaturkorrekturwert dZWTGM in einem vorteilhaften Ausführungsbeispiel auch aus einer von Motortemperatur abhängigen Kennlinie gebildet wird.

In Figur 3 ist zunächst die Korrektur des optimalen Zündwinkels abhängig von der inneren Abgasrückführung beschrieben. Aus dem Stand der Technik ist bekannt, daß die Nockenwelle derart gesteuert wird, daß sich ein vorbestimmter Überschneidungswinkel einstellt. Dieses Signal liegt der Steuereinheit 10 somit aus der Nockenwellensteuerung vor. Der eingestellte Überschneidungswinkel wnwue wird über eine Leitung 200 zu einem Kennfeld 202 geführt, dem ferner über die Leitung 14 die Motordrehzahl zugeführt ist. Dieses experimentell bestimmte Kennfeld ermittelt aus den beiden zugeführten Größen die Abgasmasse dtlrgz(0), die bei einem bestimmten Umgebungsdruck, das heißt Atmosphärendruck, und einer bestimmten Motortemperatur aus dem Abgastrakt in den Zylinder beim vorliegenden Überschneidungswinkel zurückströmt. Diese Abgasmasse wird über eine Leitung 204 zur Korrekturstelle 206 geführt, wo eine Korrektur der Abgasmasse abhängig von Atmosphärendruck patm und Motordrehzahl Nmot, die über Leitungen 28 bzw. 208 von entsprechenden Sensoren zugeführt werden, durchgeführt wird. Die korrigierte Abgasmasse dtlrgz wird über eine Leitung 210 zur Ermittlung der Abgasrückführrate frg in den Berechnungsblock 212 geführt. Diesem wird ferner die Motorlast Tl zugeführt. Die Abgasrückführrate frg ergibt sich durch Division der zugeführte Abgasmasse dtlrgz durch die Summe aus dem Motorlastsighal Tl und der Abgasmasse dtlrgz. Die ermittelte Abgasrückführrate frg wird über eine Leitung 214 zur Verknüpfungsstelle 216 geführt. Dort wird ein Grundwert frg0 subtrahiert. Dieser Grundwert wird über die Leitung 218 von einem Kennfeld 220 zugeführt, dem Motordrehzahl und Motorlast zugeführt sind. Die Grundrückführrate frg0 wird bei einer bestimmten Nockenwellenstellung wnwue0 (ohne Steuerung) abhängig von Motordrehzahl und Motorlast vorgegeben. Die Differenz dfrg zwischen ermittelter Rückführrate und Grundrückführrate wird über eine Leitung 220 zur Kennlinie 222 geführt, die die Änderung in der Abgasrückführrate in eine Änderung des optimalen Zündwinkels ΔZWopt umsetzt. Dieser Korrekturwert wird in der Verknüpfungsstelle 118 zum optimalen Zündwinkel addiert.

Die Korrektur des optimalen Zündwinkels abhängig von der internen Abgasrückführrate ergibt sich demnach nach der folgenden Gleichung:

$$\Delta ZWopt = f(dfrg) \text{ mit } dfrg = frg - frg0 \ (Nmot, Tl) \tag{3}$$

Bei externer Abgasrückführung wird ein Steuerventil durch ein Steuersignal vorbestimmter Größe angesteuert, welches zu einer vorgegebenen Abgasrückführrate führt. Die Größe des Steuersignals tvagr, vorzugsweise ein Tastverhältnis, steht dem Steuergerät zur Verfügung. Zur Korrektur der Momentenberechnung, insbesondere des optimalen Zündwinkels, wird daher ausgehend von der Größe der Steuersignals und abhängig von Motorlast und Motordrehzahl die Abgasrückführrate frg bestimmt. Zu diesem Zweck wird gemäß Figur 4 einem ersten Kennfeld 300 die Steuersignalgröße tvagr und die Motordrehzahl zugeführt. Ferner ist ein weiteres Kennfeld 302 vorgesehen, welches den aus dem Kennfeld 300 vorgegebenen Zusammenhang bei Steuergröße 0 enthält. In einem dritten Kennfeld 304 ist eine Größe für die Abgasrückführrate ohne externe Abgasrückführung infolge der eingestellten Ventilüberschneidungszeiten abhängig von Motordrehzahl und Motorlast abgelegt. Die Ausgangsgrößen der Kennfelder 302 und 304 werden über Leitungen 306 bzw. 308 zur Verknüpfungsstelle 310 geführt. Dort werden die beiden Größen miteinander multipliziert zur Bildung der Abgasrückführrate frgo ohne externen Anteil. Diese Grundabgasrückführrate frg0 wird von der Verknüpfungsstelle 310 über die Leitung 312 zur Verknüpfungsstelle 314 geführt. Dort wird der Grundwert frg0 von der Abgasrückführrate mit externer Abgasrückführanteil frg zur Bildung der Differenz dfrg subtrahiert. Die Abgasrückführrate mit externer Rückführung frg wird in der Verknüpfungsstelle 316 durch Multiplikation des über die Leitung 318 zugeführten, vom Kennfeld 300 ermittelten und des über die Leitung 320 vom Kennfeld 304 ermittelten Wert gebildet. Der Differenzwert dfrg wird dann über die Kennlinie 322 in den Korrekturwert Δ ZWopt für den optimalen Zündwinkel umgesetzt, welcher in der Verknüpfungsstelle 118 dem optimalen Zündwinkelwert aufaddiert wird.

Der Zündwinkelkorrekturwert ΔZWopt für die externe Abgasrückführung ergibt sich daher nach der folgenden Formel:

$$\Delta ZWopt = f(dfrg) \tag{4}$$

mit

$$dfrg = frg - frg0 = [f1(Nmot,tvagr)-f1(Nmot,0)]*f2(Nmot,Tl)$$

Ein zweites Ausführungsbeispiel zur Korrektur des optimalen Zündwinkels abhängig von der inneren Abgasrückführung ist in Figur 5 dargestellt. Die dort geschilderte Vorgehensweise wird dann bevorzugt angewendet, wenn die Rückführrate nur abhängig von Motordrehzahl, Motorlast und Motortemperatur ist. Dann kann alternativ zur Vorgehensweise nach Figur 3 der Zündwinkel durch zwei Zündwinkelkennfelder bei zwei verschiedenen Motortemperaturen Tmot0 und Tmot1 berechnet werden, wobei er über einer motortemperaturabhängigen Kennlinie FZWOPM (Tmot) gewichtet wird.

Der optimale Zündwinkel ZWopt ergibt sich dann aus:

$$Zwopt = dZW\lambda(1/\lambda) + FZWOPM(Tmot)*f3(Nmot,Tl,Tmot0) +$$

$$[1 - FZWOPM(Tmot)]*f3(Nmot,Tl,Tmot1) \tag{5}$$

mit FZWOPM(Tmot) = 1 bei Tmot < Tmot0 und FZWOPM(Tmot) = 0 bei Tmot > Tmot1

Entsprechend wird gemäß Figur 5 Motordrehzahl und Motorlast einem ersten Kennfeld 400 zugeführt. Dieses Kennfeld f3(Nmot,Tl,Tmot0) ist für eine Motortemperatur Tmot0 appliziert. Ferner wird Motordrehzahl und Motorlast einem zweiten Kennfeld 402 zugeführt, welches für eine Motortemperatur Tmot1 vorgegeben ist (f3(Nmot,Tl, Tmot1)). Die Motortemperatur selbst wird der Kennlinie 404 (FZWOPM) zugeführt, deren Ausgangssignal oberhalb der Motortemperatur Tmot1 Null unterhalb der Temperatur Tmot0 1 ist. Dazwischen zeigt die Kennlinie vorzugsweise lineares Verhalten. Die Motortemperatur Tmot1 ist dabei größer als die Motortemperatur Tmot0. Die aus dem Kennfeld 400 ausgelesene Größe wird über die Leitung 406 zur Korrekturstelle 408 geführt. Dort wird der Wert mit dem über die Leitung 410 zugeführten, von der aktuellen Motortemperatur abhängigen Kennlinienwert korrigiert. Dies erfolgt gemäß obiger Gleichung durch eine Multiplikation. Entsprechend wird die aus der Kennlinie 402 ausgelesene Größe über die Leitung 412 zur Verknüpfungsstelle 414 geführt. Der Verknüpfungsstelle 414 wird über die Leitung 416 eine Größe zugeführt, welche dem von der Zahl 1 in der Subtraktionsstelle 418 abgezogenen Kennlinienwert auf der Leitung 410 entspricht. Auch hier erfolgt die Korrektur gemäß obiger Gleichung durch Multiplikation. Die Ausgangssignale der Verknüpfungsstellen 408 und 414 werden über die Leitungen 420 bzw. 422 der Verknüpfungsstelle 424 zugeführt. Dort werden die beiden Werte addiert. Die Summe wird über die Leitung 426 zur Additionsstelle 428 geführt, in der ggf. der Korrekturwert abhängig von der Gemischzusammensetzung über die Leitung 430 aufaddiert wird.- Das Ergebnis stellt den optimale Zündwinkel ZWopt dar, der über die Leitung 52 den weiteren Berechnungen zugeführt wird.

Figur 6 zeigt ein zweites Ausführungsbeispiel zur Bestimmung des optimalen Zündwinkels bei externer Abgasrückführung. Bei aktiver Abgasrückführung ist-die Abgasrückführrate hauptsächlich von Motordrehzahl und Motorlast abhängig. Im Ausführungsbeispiel nach Figur 6 wird bei aktiver Abgasrückführung das optimale Zündwinkelkennfeld durch ein anderes Kennfeld ersetzt. Zu diesem Zweck ist in Figur 6 ein erstes Kennfeld f1 500 und ein zweites Kennfeld f2 502 vorgesehen. Beiden Kennfeldern wird Motordrehzahl und Motorlast zugeführt. Dabei ist das Kennfeld f1 derart appliziert, daß es den optimalen Zündwinkel ohne aktive Abgasrückführung, das Kennfeld den optimalen Zündwinkel bei aktiver Abgasrückführung ermittelt. Entsprechend werden die Ausgangsleitungen 504 und 506 der Kennfelder 500 und 502 über ein Schaltelement 508 geführt. Dieses verbindet bei nicht aktiver Abgasrückführung die Leitung 504 mit der Leitung 510, während bei aktiver Abgasrückführung die Leitung 506 und damit das Kennfeld 502 mit der Leitung 510 verbunden ist. Diese Leitung 510 führt auf eine Verknüpfungsstelle 512, in der ggf. die Korrekturanteile abhängig von der Gemischzusammensetzung und/oder der Korrekturanteil abhängig von der Gemischtemperatur aufaddiert werden. Der dadurch gebildete optimale Zündwinkel ZWopt wird über die Leitung 52 den weiteren Berechnungen zugeführt.

Der optimale Zündwinkel wird daher bei nicht aktiver Abgasrückführung durch das Kennfeld 500 bei aktiver Abgasrückführung durch das Kennfeld 502 bestimmt, bei welchen jeweils die Einflüsse auf den Zündwinkel durch die Aktivierung der Abgasrückführung berücksichtigt sind.

Die Abhängigkeit des optimalen Zündwinkels und damit des berechneten Motormoments von der Gemischzusammensetzung, der Motortemperatur, der Ansauglufttemperatur und der Abgasrückführung müssen nicht gleichzeitig berücksichtigt werden. Es kann je nach Motor und Erfordernissen auf die eine oder andere Abhängigkeit verzichtet werden.

Neben der Korrektur des Wertes für den optimalen Zündwinkel werden in einem anderen Ausführungsbeispiel der Istmomentenwert abhängig von wenigstens einer der wie vorstehend beschriebenen gebildeten Korrekturgrößen korrigiert. Dies erfolgt dadurch, daß die Differenz zwischen dem korrigierten optimalen Zündwinkel und Ist-Zündwinkel über eine Kennlinie direkt in einen Momentkorrekturwert (Zündwinkelwirkungsgrad) umgewandelt wird. Die Kennlinie stellt dabei den Verlauf des Wirkungsgrads der Brennkraftmaschine abhängig von der Differenz zwischen optimalen Zündwinkel und Ist-Zündwinkel dar.

**Patentansprüche**

1. Verfahren zur Steuerung einer Brennkraftmaschine, wobei die Betriebsgrößen Motordrehzahl (Nmot) und Motorlast (TL) der Brennkraftmaschine erfaßt werden, abhängig von diesen auf der Basis eines vorgegebenen Drehmomentenmodells der Brennkraftmaschine (40-72) ein Istmoment der Brennkraftmaschine (Mindist) ermittelt wird und/oder ein vorgegebenes Solldrehmoment (Mindsoll) in wenigstens eine Steuergröße der Brennkraftmaschine (Ti, ZW, a) umgesetzt wird, wobei als eine Größe des Drehmomentenmodells ein optimaler Zündwinkelwert (Zwopt, 50) ermittelt wird, bei dem die Brennkraftmaschine einen bestimmten Wirkungsgrad aufweist, der korrigiert abhängig von der aktuellen Zündwinkeleinstellung der Brennkraftmaschine zur Bestimmung des Istmoments der Brennkraftmaschine (Mindist) und/oder zur Umsetzung des Solldrehmoments (Mindsoll) ausgewertet wird, **dadurch gekennzeichnet, daß** die Bildung des optimalen Zündwinkelwerts (Zwopt) abhängig von Motortemperatur (Tmot) und/oder Ansauglufttemperatur (Tans) und/oder Größe der Abgasrückführrate und/oder Ventilüberschneidungswinkel (wnwue) erfolgt.

2. Verfahren nach Anspruch 1, **dadurch gekennzeichnet, daß** die Größe der Abgasrückführrate bei innerer Abgasrückführung abhängig von Motordrehzahl, Motorlast und Motortemperatur bestimmt wird.

3. Verfahren nach einem der vorhergehenden Ansprüche, **dadurch gekennzeichnet, daß** die Abhängigkeit von der Größe der Abgasrückführrate bei externer Abgasrückführung mittels zweier Kennfelder für den optimalen Zündwinkel bestimmt wird, zwischen denen bei Aktivierung und Deaktivierung der Abgasrückführung umgeschaltet wird.

4. Verfahren nach Anspruch 1 oder 2, **dadurch gekennzeichnet, daß** die Größe der Abgasrückführrate bei externer Abgasrückführung die Größe des Ansteuersignals (tvagr) des Abgasrückführventils ist.

5. Verfahren nach einem der vorhergehenden Ansprüche, **dadurch gekennzeichnet, daß** der optimale Zündwinkel der Zündwinkel ist, bei dem die Brennkraftmaschine den höchsten Wirkungsgrad zeigt.

6. Vorrichtung zur Steuerung einer Brennkraftmaschine, mit einer Steuereinheit (10), die Betriebsgrößen der Brennkraftmaschine wie Motordrehzahl (Nmot) und Motorlast (TL) erfaßt und abhängig von diesen auf der Basis eines vorgegebenen Drehmomentenmodells der Brennkraftmaschine (40-72) ein Istmoment der Brennkraftmaschine (Mindist) ermittelt und/oder ein vorgegebenes Solldrehmoment (Mindsoll) in wenigstens eine Steuergröße der Brennkraftmaschine (Ti, ZW, a) umgesetzt, wobei als eine Größe des Drehmomentenmodells ein optimaler Zündwinkelwert (Zwopt, 50) ermittelt wird, bei dem die Brennkraftmaschine einen bestimmten Wirkungsgrad aufweist, der korrigiert abhängig von der aktuellen Zündwinkeleinstellung der Brennkraftmaschine zur Bestimmung des Istmoments der Brennkraftmaschine (Mindist) und/oder zur Umsetzung des Solldrehmoments (Mindsoll) ausgewertet wird, **dadurch gekennzeichnet, daß** die Steuereinheit (10) Mittel aufweist, die den optimalen Zündwinkelwert (Zwopt) abhängig von Motortemperatur (Tmot) und/oder Ansauglufttemperatur (Tans) und/oder Größe der Abgasrückführrate und/oder Ventilüberschneidungswinkel (wnwue) bilden.

**Claims**

1. Method for controlling an internal combustion engine, the operating variables engine speed (Nmot) and engine load (TL) of the internal combustion engine being detected, an actual torque of the internal combustion engine (Mindist) being determined as a function of these variables on the basis of a predetermined torque model of the internal combustion engine (40-72) and/or a predetermined desired torque (Mindsoll) being converted into at least one controlled variable of the internal combustion engine (Ti, ZW, $\alpha$), an optimum ignition angle value (Zwopt, 50), at which the internal combustion engine has a certain efficiency, being determined as one variable of the torque model, this value, after being corrected as a function of the current ignition-angle setting of the internal combustion engine, being evaluated to determine the actual torque of the internal combustion engine (Mindist) and/or to convert the desired torque (Mindsoll), **characterized in that** the optimum ignition angle value (Zwopt) is formed as a function of the engine temperature (Tmot) and/or intake air temperature (Tans) and/or the magnitude of the exhaust-gas recirculation rate and/or valve overlap angle (wnwue).

2. Method according to Claim 1, **characterized in that** the magnitude of the exhaust-gas recirculation rate in the case of internal exhaust-gas recirculation is determined as a function of the engine speed, the engine load and the engine temperature.

3. Method according to one of the preceding claims, **characterized in that** the dependence on the magnitude of the exhaust-gas recirculation rate in the case of external exhaust-gas recirculation is determined by means of two characteristic maps for the optimum ignition angle, between which the system switches upon activation and deactivation of exhaust-gas recirculation.

4. Method according to Claim 1 or 2, **characterized in that** the magnitude of the exhaust-gas recirculation rate in the case of external exhaust-gas recirculation is the magnitude of the activation signal (tvagr) of the exhaust-gas recirculation valve.

5. Method according to one of the preceding claims, **characterized in that** the optimum ignition angle is the ignition angle at which the internal combustion engine exhibits the greatest efficiency.

6. Apparatus for controlling an internal combustion engine, with a control unit (10), which detects operating variables of the internal combustion engine, such as engine speed (Nmot) and engine load (TL) and, as a function of these variables, determines an actual torque of the internal combustion engine (Mindist) on the basis of a predetermined torque model of the internal combustion engine (40-72) and/or converts a predetermined desired torque (Mindsoll) into at least one controlled variable of the internal combustion engine (Ti, ZW, $\alpha$), an optimum ignition angle value (Zwopt, 50), at which the internal combustion engine has a certain efficiency, being determined as one variable of the torque model, this value, after being corrected as a function of the current ignition-angle setting of the internal combustion engine, being evaluated to determine the actual torque of the internal combustion engine (Mindist) and/or to convert the desired torque (Mindsoll), **characterized in that** the control unit (10) has means that form the optimum ignition angle value (Zwopt) as a function of the engine temperature (Tmot) and/or intake air temperature (Tans) and/or the magnitude of the exhaust-gas recirculation rate and/or valve overlap angle (wnwue).

**Revendications**

1. Procédé de commande d'un moteur à combustion interne selon lequel on saisit les grandeurs de fonctionnement régime moteur (Nmot) et de charge moteur (TL) du moteur à combustion interne, en fonction de celle-ci, sur la base d'un modèle de couple, prédéterminé du moteur (40-72) on détermine un couple réel du moteur (Mindist) et/ou un couple de consigne prédéterminé (Mindsoll) d'au moins une grandeur de commande du moteur à combustion interne (Ti, ZW, $\alpha$) pour la convertir, et comme grandeur du modèle de couple on détermine une valeur d'angle d'allumage optimale (Zwopt, 50) pour laquelle le moteur à combustion interne a un certain rendement, on le corrige en fonction du réglage actuel de l'angle d'allumage du moteur pour déterminer le couple réel du moteur (Mindist) et/ou pour convertir le couple de consigne (Mindsoll),
**caractérisé en ce que**
la formation de la valeur de l'angle d'allumage optimum (Zwopt) dépend de la température du moteur (Tmot) et/ou de la température de l'air aspiré (Tans) et/ou de l'importance du taux de réinjection des gaz d'échappement et/ou de l'angle de chevauchement des soupapes (wnwue).

2. Procédé selon la revendication 1,
**caractérisé en ce que**
pour une réinjection interne des gaz d'échappement on détermine l'amplitude du taux de réinjection des gaz d'échappement en fonction du régime, de la charge et de la température du moteur.

3. Procédé selon l'une quelconque des revendications précédentes,
**caractérisé en ce qu'**
on détermine la dépendance par rapport à la grandeur du taux de réinjection des gaz d'échappement pour une réinjection externe des gaz d'échappement à l'aide de deux champs de caractéristiques pour l'angle d'allumage optimum entre lesquels on commute entre l'activation et la désactivation de la réinjection des gaz d'échappement.

4. Procédé selon l'une quelconque des revendications 1 ou 2,
**caractérisé en ce que**
la grandeur du taux de réinjection des gaz d'échappement pour une réinjection externe des gaz d'échappement est la grandeur du signal de commande (tvagr) de la vanne de réinjection des gaz d'échappement.

5. Procédé selon l'une quelconque des revendications précédentes,
**caractérisé en ce que**

l'angle d'allumage optimum est l'angle d'allumage pour lequel le moteur à combustion interne présente le rendement le plus élevé.

6. Dispositif de commande d'un moteur à combustion interne comportant une unité de commande (10) qui saisit les paramètres de fonctionnement du moteur à combustion interne tels que le régime moteur (Nmot) et la chargeur moteur (TL) et en fonction de ces paramètres, sur la base d'un modèle de couple prédéterminé du moteur (40-72) on détermine un couple réel du moteur à combustion interne (Mindist) et/ou un couple de consigne (Mindsoll) que l'on convertit en au moins une grandeur de commande du moteur à combustion interne (Ti, ZW, $\alpha$), comme grandeur du modèle de couple on détermine une valeur optimale de l'angle d'allumage (Zwopt, 50) pour laquelle le moteur à combustion interne présente un certain rendement, que l'on exploite en le corrigeant en fonction du réglage actuel de l'angle d'allumage du moteur à combustion interne pour détermine le couple réel du moteur (Mindist) et/ou pour convertir le couple de consigne (Mindsoll),
**caractérisé en ce que**
l'unité de commande (10) comprend des moyens qui forment l'angle d'allumage optimum (Zwopt) en fonction de la température du moteur (Tmot) et/ou de la température de l'air aspiré (Tans) et/ou de la grandeur du taux de réinjection des gaz d'échappement et/ou de l'angle de chevauchement de soupape (wnwue).

Fig.1

Fig. 2

Nmot → [14] → ⎡ 100 ⎤ → ZWopt(n,tl) [108]

Tl → [18] → ⎣    ⎦

λ → [22] → ⎡ 102 ⎤ → dZWλ(1/λ) [112] → (+)(110) → ZWopt [116] → (+)(118) → ZWopt [52]

Tmot → [28] → ⎡ 106 ⎤ → dZWTGM(Tmot,Tans) [114]

Tans → [104] → ⎣    ⎦

[120] ΔZWopt → ⎡ 122 ⎤

EP 0 807 208 B1

Fig.3

EP 0 807 208 B1

Fig. 4

$\Delta ZWopt$

322

dfrg

314

frg

316

frg0

312

320

318

$f_1(Nmot, tvagr)$  300

$f_1(Nmot, 0)$  302

$f_2(Nmot, Tl)$  304

306

308  310

tvagr

Nmot  14

14

14

Tl  28

Fig.5

Fig.6